# EUROPÄISCHE PATENTSCHRIFT

(11) **EP 0 503 014 B1**
(45) Veröffentlichungstag und Bekanntmachung des Hinweises auf die Patenterteilung: **01.03.1995**
(21) Anmeldenummer: 91915121.7
(22) Anmeldetag: 04.09.1991
(51) Int. Cl.: G01D 5/249, G01D 5/246, G01D 5/36

(54) **VERFAHREN ZUM MESSEN VON LÄNGEN**
METHOD OF MEASURING LENGTHS
PROCEDE DE MESURE DE LONGUEURS

(30) Priorität: 07.09.1990 DD 343881
(43) Veröffentlichungstag der Anmeldung: 16.09.1992
(73) Patentinhaber: CARL ZEISS JENA GmbH, 07745 Jena (DE)
(72) Erfinder: SCHUCHARDT, Gerd, D-6902 Jena (DE); FREITAG, Hans-Joachim, D-6900 Jena (DE)
(74) Vertreter: Geyer, Werner, Dr.-Ing.
(86) Internationale Anmeldenummer: EP9101675
(87) Internationale Veröffentlichungsnummer: WO9204599

(56) Entgegenhaltungen:
- EP-A- 246 404
- DE-A- 3 742 135
- DE-A- 4 021 010

## Beschreibung

### Technisches Gebiet

Die Erfindung bezieht sich auf ein Verfahren zum Messen von Längen, bei dem ein Teilungsträger, der eine Rasterteilung mit einer Zählspur und Referenzmarken mit unterschiedlichen Abständen in mindestens einer anderen Spur aufweist, von einer Abtasteinrichtung abgetastet wird, deren Abtastsignale in einer Auswerteinrichtung und einer Anzeigeeinrichtung weiterverarbeitet werden, und bei dem die unterschiedlichen Abstände der Referenzmarken zueinander durch Abtastung der Rasterteilung in Zähleinheiten der Zählspur ermittelt und hieraus Informationen in codierter Form über die Absolutposition der Abtasteinrichtung bezüglich einer Nullposition des Teilungsträgers gewonnen werden, wobei der Code für den Absolutwert einer zu erfassenden Referenzmarke durch Abtastung von zwei weiteren Referenzmarken gebildet wird, die in Verfahrrichtung vor dieser Referenzmarke liegen.

Das Verfahren ist bei translatorischen Meßsystemen anwendbar, inbesondere bei hochauflösenden Meßsystemen für große Längen an Werkzeugmaschinen sowie Längen- und Koordinatenmeßmaschinen.

### Stand der Technik

Im Werkzeugmaschinenbau und im allgemeinen Maschinenbau werden in großem Umfang Längenmeßsysteme eingesetzt. Grundsätzlich sind dabei zwei Arten solcher Längenmeßsysteme bekannt, wobei die eine Art mit dem Begriff "Absolutwert-System" und die andere Art mit dem Begriff "Inkrementalzählsystem" bezeichnet werden kann.

Absolutwertsysteme, wie z.B. das in der CH-A-374 207 beschriebene Meßsystem, und Inkrementalsysteme, wie z.B. das in der CH-A-499 091 geschilderte System, haben jeweils eine Reihe spezifischer Vor- und Nachteile. Jedoch sind auch Meßsysteme bekannt, die mit spezifischen hybriden Lösungen die Vorteile beider genannten Systeme verbinden bzw. deren Nachteile vermeiden (z.B. DE-A-2 416 212 oder DE-C-3 144 334).

In der Längen- und Winkelmeßeinrichtung gemäß der DE-A-2 416 212 wird ein Teilungsträger mit einer zweiten, zur Inkrementskala parallelen Referenzspur und identischen Referenzmarken eingesetzt. Dabei können die Referenzmarken auch aus einzelnen Marken zusammengesetzt sein. Der Absolutwert jeder Referenzmarke bestimmt sich aus deren jeweiligem spezifischen Abstand zu genau einer benachbarten Referenzmarke, wobei diese unterschiedlichen Abstände zwischen den benachbarten Referenzmarken durch die Abtastung der Inkrementspur ermittelt werden. Zur Identifizierung der einzelnen identischen Referenzmarken muß jeweils die betreffende Referenzmarke und eine benachbarte Referenzmarke abgetastet, deren gegenseitiger spezifischer Abstand in Einheiten der Inkrementspur ermittelt und zusammen mit der Meßrichtungsinformation ausgewertet werden. Bei vertetbaren maximalen Abständen der Referenzmarken ist der Informationsgehalt einer so codierten Referenzspur begrenzt. Daraus folgt, daß diese Codierung nicht für beliebig lange Meßsysteme geeignet ist.

In der DE-A-3 617 254 wird ein Meßverfahren gemäß dem Oberbegriff des einzigen Anspruchs beschrieben, bei dem zur Bestimmung des Absolutwertes einer Referenzmarke mindestens zwei Abstände zwischen dieser und zwei weiteren Referenzmarken ermittelt werden. Dieses vorbekannte Meßsystem hat den Vorteil, daß ein wesentlich größerer Informationsgehalt in vertretbar kleinen Abständen über die Referenzmarken codiert werden kann. Die eindeutige Decodierung der unterschiedlichen Abstände ist jedoch aufwendiger und die auftretende Zeitverzögerung zwischen dem rechentechnischen Bestimmen der zwei Abstände zu dieser Referenzmarke und der Zuordnung der Absolutposition zu dieser gleichen Referenzmarke ist größer und kann die zulässige Verfahrgeschwindigkeit einschränken.

Aus der DE-A-3 324 004 ist ein Meßverfahren bekannt, bei dem analog zum Stand der Technik aus der DE-A-2 416 212 die Bestimmung des Absolutwertes einer Referenzmarke mittels der Decodierung des jeweiligen spezifischen Abstandes zu einer benachbarten Referenzmarke erfolgt. Zur Vergrößerung des Codierumfanges wird hier zusätzlich eine zweite parallele Referenzmarkenspur eingeführt, die parallel abgetastet und ausgewertet werden muß.

Allen angeführten Meßverfahren haften folgende Mängel an:
Die Ermittlung des Absolutwertes der jeweiligen Referenzmarke müßte zeitgleich mit dem Abtasten der Referenzmarke durch die Abtasteinheit beim Überfahren erfolgen. Es ist aber eine endliche Zeit für die Decodierung der Abstände und die Bereitstellung der abgespeicherten Absolutwerte in der Auswerteinrichtung notwendig, insbesondere dann, wenn zur Decodierung Microrechner eingesetzt werden sollen. Bei hohen Verfahrgeschwindigkeiten wäre die bereitgestellte Absolutposition nicht mehr identisch mit der tatsächlichen Position.

Für Anwendungsfälle, bei denen die Absolutpositionen, die als metrologisches Raster gelten, mit variablen Fehlerkomponenten, wie z.B. Temperaturfehler oder belastungsabhängige Deformationsanteile, mittels Microrechnern korrigiert werden sollen, steht keine ausreichende Zeit für diese Korrekturrechnung zur Verfügung.

### Beschreibung der Erfindung

Ziel der Erfindung ist es, den Gebrauchswert eines Längenmeßsystems, das einen Mikrorechner enthält, durch Erhöhung der Meßsignalverarbeitungsgeschwindigkeit zu verbessern.

Der Erfindung liegt daher die Aufgabe zugrunde, ein Meßverfahren für ein quasi-absolutes inkrementales Längenmeßsystem anzugeben, bei dem ein Teilungsträger mit abstandscodierten Referenzmarken einer Referenzspur abgetastet wird, und das eine ausreichende Zeit zwischen dem Erkennen des Abstandscodes der Referenzmarken und dem Bereitstellen der Absolutposition zur Decodierung und für Korrekturrechnungen gewährleistet.

Diese Aufgabe wird erfindungsgemäß bei einem Meßverfahren der eingangs genannten Art dadurch gelöst, daß die zu erfasssende Referenzmarke Selbst nicht Bestandteil der Codierung für ihren eigenen Absolutwert ist. Dabei ist es vorteilhaft, wenn die den Code bildenden beiden weiteren Referenzmarken in Verfahrrichtung unmittelbar vor der zu erfassenden Referenzmarke, welcher der Absolutwert zugeordnet wird, liegen.

Bei dem erfindungsgemäßen quasi-absoluten inkrementalen Längenmeßverfahren steht die erforderliche Zeit für die Decodierung, für Hilfsoperationen und für die Absolutwertbereitstellung zur Verfügung, die für die relative Verschiebung der Abstasteinrichtung vom Moment der Abtastung der letzten, zum abstandscodierten Code gehörenden Referenzmarke bis zum Erreichen der zu erfassenden Referenzmarke, welcher der Absolutwert zugeordnet wird, benötigt wird. Von der Art der Codierung hängt es dabei ab, ob jede Referenzmarke eine Referenzmarke mit zuordenbarem Absolutwert ist oder ob sie nur zu Codierzwecken eingesetzt wird und als solche Referenzmarke keinen zugeordneten Absolutwert hat. Das erfindungsgemäße Verfahren ermöglicht es, daß bei einem quasi-absoluten inkrementalen Längenmeßsystem die den Referenzmarken zugeordneten Absolutwerte ohne Zeitverzögerung bereitgestellt werden und somit die bereitgestellten Absolutpositionen auch bei hohen Verfahrgeschwindigkeiten identisch mit den tatsächlichen Positionen sind. Weiterhin sind den absoluten Positionen aktuelle variable Fehlerkomponenten zuordenbar, ohne daß das dynamische Verhalten des Meßsystems beeinflußt wird.

Aufgrund der erfindungsgemäß geschaffenen Zeitspanne zwischen der Codeerkennung und der Bereitstellung der Absolutwerte sind vor allem auch für die Decodierung von Doppelcodes und für zusätzliche Korrekturrechnungen in wirtschaftlich besonders vorteilhafter Weise Mikrorechner einsetzbar.

### Kurze Beschreibung der Zeichnungen

Die Erfindung wird nachfolgend anhand der Zeichnung im Prinzip beispielshalber noch näher erläutert. Es zeigen:
**Fig. 1** einen für den Einsatz bei einem erfindungsgemäßen Verfahren geeigneten Teilungsträger mit einer einfach-codierten Referenzspur;
**Fig. 2** einen für ein erfindungsgemäßes Verfahren einsetzbaren Teilungsträger mit einer zweifach-codierten Referenzspur, und
**Fig. 3** die Anordnung der Abtastelemente in einer Abtasteinrichtung zum Abtasten der Teilungsträger nach Fig. 1 oder 2.

### Ausführliche Beschreibung der Zeichnungen

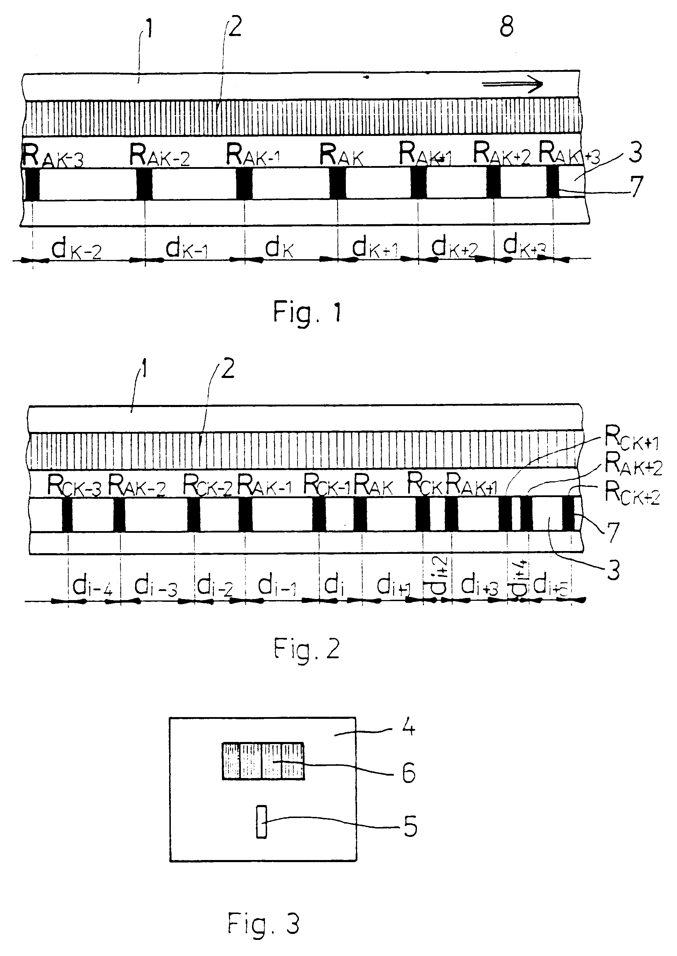

In Fig. 1 ist von einem quasi-absoluten inkrementalen Längenmeßsystem, mit dem das erfindungsgemäße Verfahren ausführbar ist, nur ein Teilungsträger 1 dargestellt, der eine Rasterteilung 2 und eine eine Referenzmarkenspur 3 abtastende Abtasteinrichtung aufweist, die mit einer Auswerteinrichtung verbunden ist, welche elektrische Absolutwertsignale erzeugt. Hierzu ist in Fig. 3 eine Abtastplatte 4 der Abtasteinrichtung gezeigt, die eine Marke 5 zum Abtasten der Referenzmarkenspur 3 und ein Gegengitter 6 mit vier um 90° phasenverschobenen Bereichen zum Abtasten der Rasterteilung 2 umfaßt.

Bei der in Fig. 1 dargestellten Referenzmarkenspur 3 handelt es sich um eine einfach-codierte Referenzmarkenspur. Alle Referenzmarken 7 dieser Referenzmarkenspur 3 sind Referenzmarken mit Absolutwertzuordnung R_{AK}.

Die Information über den Absolutwert der zu erfassenden Referenzmarke R_{AK} ist für den Fall der Vorwärtsbewegung der nicht dargestellten Abtasteinrichtung in Teilungsrichtung 8 in den Referenzmarken R_{AK-2} und R_{AK-1} bzw. in deren Abstand d_{K-1} enthalten, der anhand der Rasterteilung 2 mittels der von ihr abgeleiteten Zählsignale ermittelt wird.

Für den Fall der Rückwärtsbewegung ist die Information in den Referenzmarken R_{AK+1} und R_{AK+2} bzw. in deren Abstand d_{K+2} enthalten. Dabei ist zu beachten, daß zur Information über die Absolutposition der Referenzmarken 7 neben den Abständen d auch noch das Vorzeichen entsprechend einer Vorwärts- (+) oder einer Rückwärts- (-) -Bewegung gehöst, d. h. die Information über den Absolutwert R_{AK}, steckt in +(d_{K-1}) und und in -(d_{K-2}).

Andererseits beinhaltet -(d_{K-1}) die Information für die Referenzmarke R_{AK-3} und +(d_{K+2}) die Information für R_{AK+3}.

Somit kann z.B. bei einer Vorwärtsbewegung nach dem Passieren der Abtasteinrichtung über R_{AK-2} und R_{AK-1} sowie dem Erfassen des Abstandes +(d_{K-1}) anhand der Zählsignale der Rasterspur 2 diese Information decodiert werden, wobei für diese Decodierung und weitere Korrekturrechnungen in einem Prozessor Zeit zur Verfügung steht und der berechnete und korrigierte Absolutwert für R_{AK} zur Verfügung stehen kann, noch bevor R_{AK} erreicht wird, und daß beim Erreichen von R_{AK} dieser Wert sofort für die Anzeigeeinrichtung zur Verfügung stehen kann.

Im Falle einer Zweifach-Codierung, wie eine solche in Fig. 2 dargestellt ist, sind auch Referenzmarken R_{CK} in der Referenzmarkenspur enthalten, die nur zur Codierung dienen und selbst keine Absolutinformation zugeordnet bekommen. Hierbei würde für eine Vorwärtsbewegung der Absolutwert von R_{AK} durch +(dⱼ₋₂) und +(dⱼ₋₁) und bei Rückwärtsbewegung durch -(dⱼ₊₂) und -(dⱼ₊₃) codiert sein.

Als Abtasteinrichtung läßt sich jede Einrichtung, die zur Abtastung der Referenzmarkenspur 3 geeignet ist, verwenden. In der Praxis wird jedoch bevorzugt eine auf photoelektrischer Grundlage arbeitende Abtasteinrichtung eingesetzt, die relativ zum Teilungsträger verschiebbar angeordnet ist. Sie umfaßt im allgemeinen eine Lichtquelle zur Beleuchtung der Abtastplatte und der Teilung des Teilungsträgers 1, wobei gegebenenfalls auch noch eine Abbildungsoptik vorgesehen sein kann, mit der die Fenster der Abtastplatte und die Teilungen des Teilungsträgers 1 auf in der Abtasteinrichtung vorhandene photoelektrische Empfänger abgebildet werden können, welche die elektrischen Abtastsignale zur Ermittlung der zu erfassenden Position erzeugen.

## Patentansprüche

1. Verfahren zum Messen von Längen, bei dem ein Teilungsträger (1), der eine Rasterteilung (2) mit einer Zählspur und Referenzmarken (7) mit unterschiedlichen Abständen (d_{K-2}; d_{K-1}; .....; dₖ₊₃) in mindestens einer anderen Spur (3) aufweist, von einer Abtasteinrichtung abgetastet wird, deren Abtastsignale in einer Auswerteeinrichtung und einer Anzeigeeinrichtung weiterverarbeitet werden, und bei dem die unterschiedlichen Abstände (d_{K-2}; d_{K-1}; .....; d_{K+3}) der Referenzmarken (7) zueinander durch Abtasten der Rasterteilung in Zähleinheiten der Zählspur ermittelt und hieraus Informationen in codierter Form über die Absolutposition der Abtasteinrichtung bezüglich einer Nullposition des Teilungsträgers gewonnen werden, wobei der Code für den Absolutwert einer zu erfassenden Referenzmarke (R_{AK}) durch Abtastung von zwei weiteren Referenzmarken (R_{AK-1}; R_{AK-2}) gebildet wird, die in Verfahrrichtung (8) vor dieser Referenzmarke (R _{AK}) liegen, **dadurch gekennzeichnet**, daß die zu erfassende Referenzmarke (R_{AK}) selbst nicht Bestandteil der Codierung für ihren eigenen Absolutwert ist.

## Claims

1. Method of measuring lengths in which a graduation carrier (1), which has a raster graduation (2) with a counting track and reference marks (7) with different spacings (d_{K-2}; d_{K-1}...;d_{K+3}) in at least one other track (3), is scanned by a scanning device, the scanning signals from which are processed in an analysing device and an indicating device and in which the different spacings (_{K-2};d_{K-1}...;d_{K+3}) of the reference marks (7) from one another are determined by scanning the raster graduation in counting units of the counting track and information is produced therefrom in coded form relating to the absolute position of the scanning device with respect to a zero position of the graduation carrier, whereby the code for the absolute value of a reference mark (R_{AK}) to be detected is formed by scanning two further reference marks (R_{AK-1};R_{AK-2}), which are situated before the reference mark (R_{AK}) in the direction of movement (8), characterised in that the reference mark (R_{AK}) to be detected is not itself a component of the coding for its own absolute value.

## Revendications

1. Procédé de mesure de longueurs dans lequel un support de graduations (1), qui comprend une grille de graduations (2) avec une piste de comptage et des marques de référence (7) séparées par des écarts différents (d_{K-2}; d_{K-1};...; d_{K+3}) dans au moins une autre piste (3), est balayé par un dispositif d'exploration dont les signaux issus du balayage sont traités dans un dispositif d'évaluation et dans un dispositif d'affichage, et dans lequel les différents écarts (d_{K-2}; d_{K-1};...; d_{K+3}) entre les marques de référence (7) sont obtenus, en unités de comptage de la piste de comptage, par un balayage de la grille de graduations et des informations sont ainsi obtenues sous forme codée sur la position absolue du dispositif d'exploration par rapport à une position zéro du support de graduations, le code de la valeur absolue d'une marque de référence à détecter (R_{AK}) étant formé à partir du balayage de deux autres marques de référence (R_{AK-1}, R_{AK-2}), qui sont situées à l'avant de cette marque de référence (R_{AK}), dans la direction du déplacement (8), caractérisé en ce que la marque de référence (R_{AK}) à détecter n'est pas elle-même un élément pris en compte dans le codage pour sa propre valeur absolue.
